# EUROPEAN PATENT SPECIFICATION

(11) **EP 1 931 493 B1**
(45) Date of publication and mention of the grant of the patent: **14.11.2012**
(21) Application number: 06779322.4
(22) Date of filing: 07.09.2006
(51) Int. Cl.: B23K 9/14, B23P 23/04

(54) **Apparatus for use in the manufacture of clad metallic cylindrical substrate and method of manufacturing a hardfaced metal-clad cylindrical substrate.**
Vorrichtung zur herstellung von hart beschichteten walzen und verfahren zur herstellung von hart beschichteten walzen
Appareil et procédé pour la fabrication de rouleaux à surface renforcée.

(30) Priority: 08.09.2005 GB 0518322
(43) Date of publication of application: 18.06.2008
(73) Proprietor: Welding Alloys Limited, Fowlmere Near Royston Hertfordshire SG8 7QS (GB)
(72) Inventor: TECCO, Dorival Goncavales, Cambridgeshire CB4 2SP (GB); ATAMERT, Serdar, Nr Royston Hetfordshire SG8 7QP (GB)
(74) Representative: Turnbull, Alexander James
(86) International application number: PCT/GB2006/003303
(87) International publication number: WO 2007/028990

(56) References cited:
- EP-A- 0 049 899
- EP-A1- 0 529 816
- WO-A-90/15375
- DE-A1- 2 131 142
- GB-A- 2 177 040
- US-A- 4 435 893
- US-A1- 2003 062 352

## Description

This invention relates to an apparatus for use in the manufacture of clad metal cylindrical substrates in accordance with the preamble of claim 1 and to a method of manufacturing a hardfaced metal-clad cylindrical substrate in accordance with the preamble of claim 7.

Such hardfaced metal clad cylindrical substrates are used in harsh and demanding working environments where resistance to abrasion, adhesion, erosion, cavitation, oxidation and/or other corrosion is important and which comprise a metallic substrate clad on its working surface, by arc welding, with a hard wearing, oxidation-and/or corrosion-resistant material, such as a steel, low-alloy ferrous material, iron or a high-alloy ferrous material, cobalt-based alloy, nickel-based alloy or a copper-based alloy.

Throughout this specification, the word "manufacture" is used in respect of not only the primary production of hardfaced rollers, plates and other similar metal clad products but also the refurbishment of such products.

A typical technique for manufacturing hardfaced rollers involves a cladding operation by arc welding to the outer surface of a comparatively inexpensive and less durable cylindrical metal substrate which, after such cladding, is demounted from the cladding apparatus and is transported to remote machining apparatus where its now hardfaced, clad surface is machined, for example, by milling, to provide a hardfaced surface of a predetermined depth and, hence, a hardfaced roller of a predetermined diameter, as well as of a desired smoothness.

Such a technique is highly labour intensive and involves transporting the hardfaced rollers from the cladding apparatus to the remote machining apparatus using heavy moving equipment, such as a heavy duty forklift truck. Such demounting, transporting and remounting procedures are, as a consequence, expensive, as well as posing a threat to the health and safety of operatives. Further costs are involved in having the cladding and remote machining apparatus in separate locations.

Also, the clad rollers are machined cold, resulting in a surface whose smoothness could be improved.

It is an object of the present invention to provide apparatus for use in the manufacture of metal clad cylindrical substrates in accordance with claim 1 and a method of which manufacturing a hardfaced, metal-clad substrate in accordance with claim 7.

EP0049899 discloses an apparatus showing in combination the features of the preamble of claim 1 and of the preamble of claim 7 for use in the manufacture of clad substrates. Work pieces, particularly pipes, are clad and milled with several milling units.

In order that the invention may be more fully understood, apparatus in accordance therewith and for manufacturing a hardfaced roller for use in a steel rolling plant will now be described by way of example and with reference to the accompanying drawings in which:
Figures 1 to 4 are respective front elevational, plan, side elevational and perspective views of hardfaced roller manufacturing apparatus;

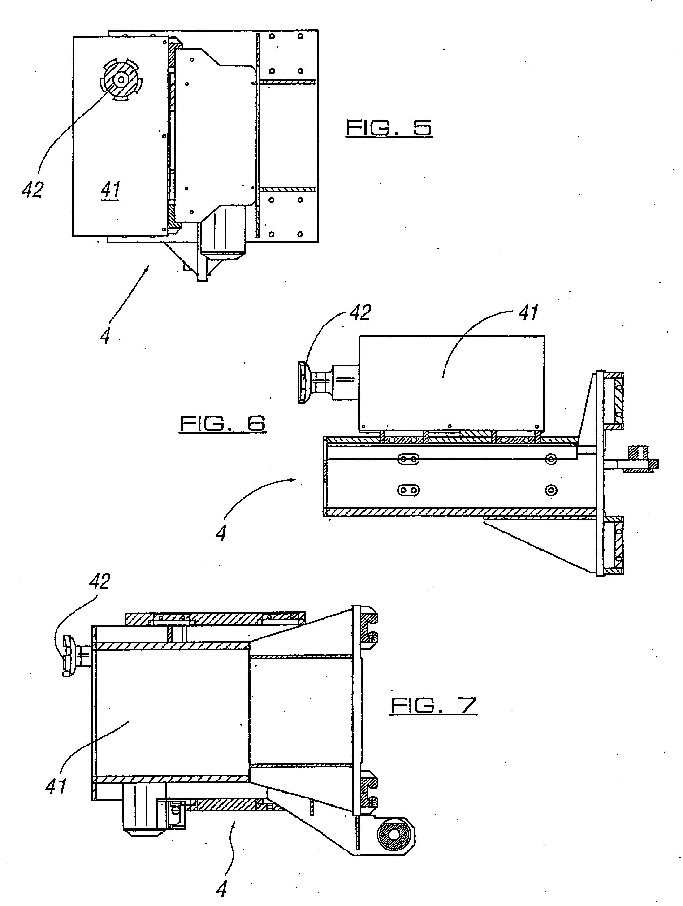

Figures 5 to 7 are respective front elevational, plan and side elevational views of a milling device used in the apparatus shown in Figures 1 to 4;

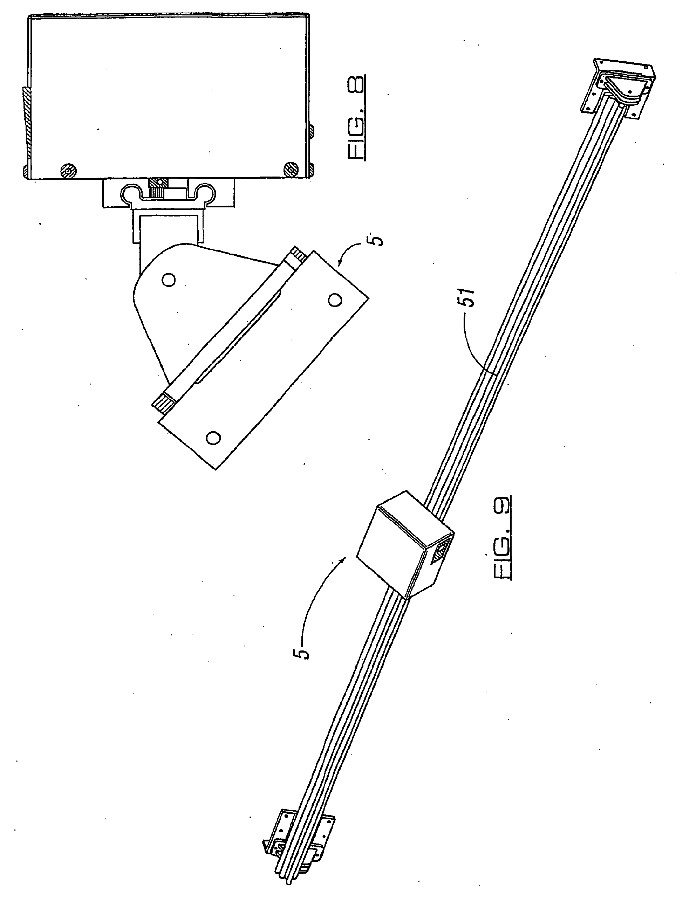

Figures 8 and 9 are respective side elevational and perspective views of a laser monitoring device used in the apparatus shown in Figures 1 to 4; and
Figure 10 is a diagrammatic section, not to scale, of a partially clad and machined hardfaced roller.

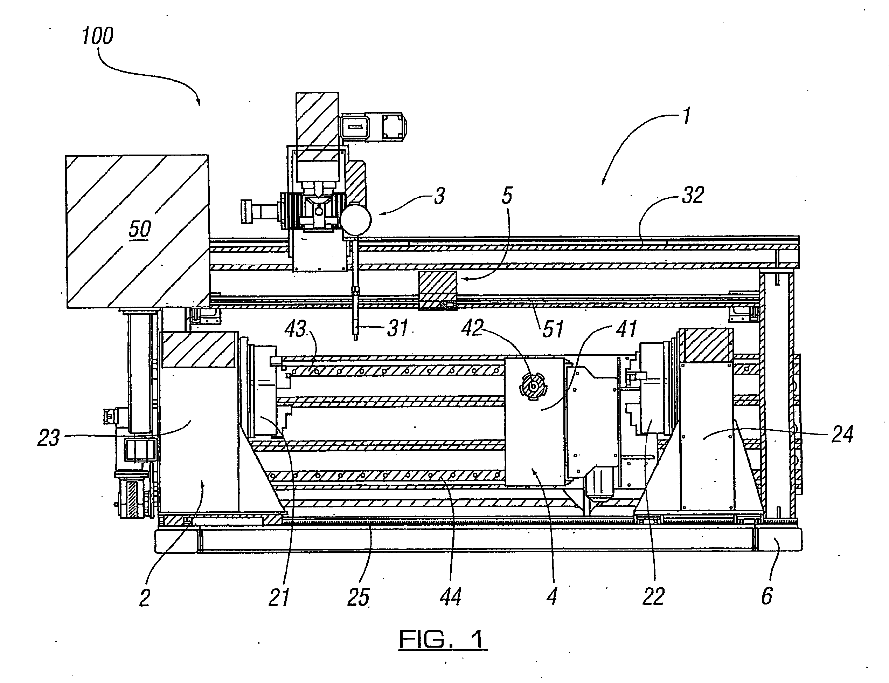

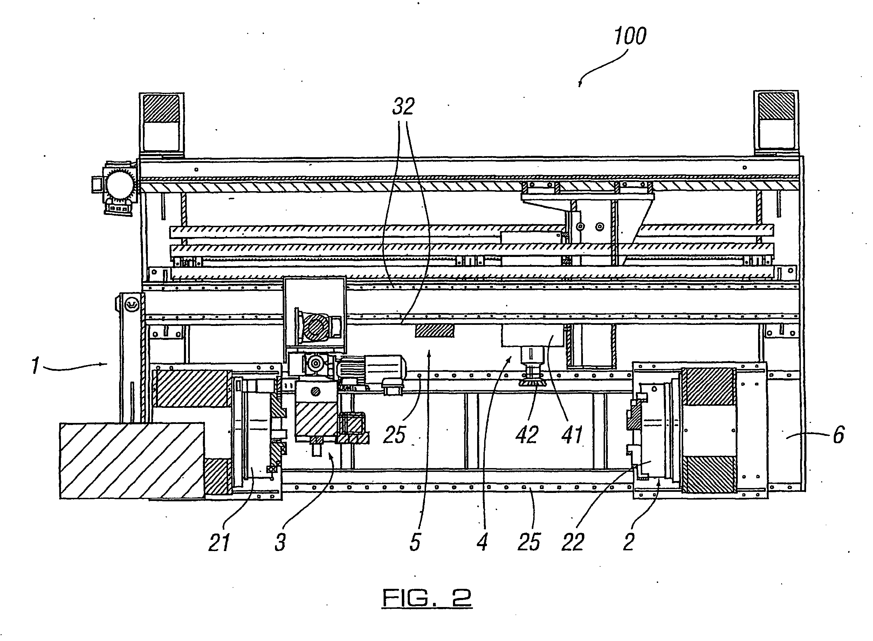

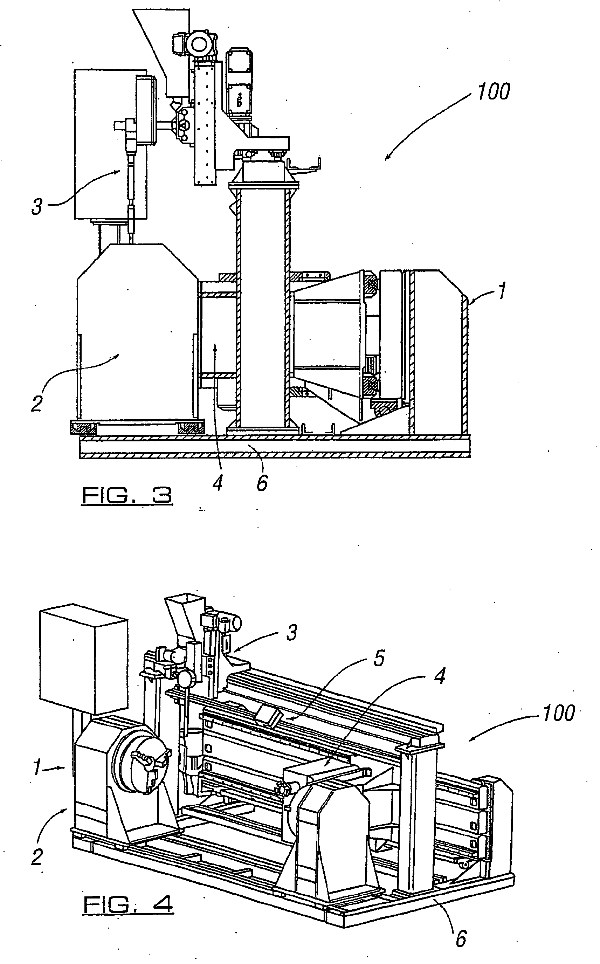

Referring firstly to Figures 1 to 4 of the accompanying drawings, apparatus, indicated generally at 1, for manufacturing a hardfaced roller (not shown) for use in a steel rolling plant, comprises four main components at a cladding location 100, namely:
a device similar to a lathe and indicated generally at 2 for rotatably supporting a metal cylinder (not shown), as a substrate, to be clad with a metal by arc welding;
an arc welding device indicated generally at 3 for cladding the surface of the metal cylinder with metal;
a device indicated generally at 4 for machining the metal-clad surface of the cylinder; and
a laser device indicated generally at 5 for monitoring the metal-clad surface and/or the unclad surface of the cylinder.

The apparatus 1 comprises a bed 6 upon which the devices 2 to 5 are mounted at the cladding location 100.

The lathe-type device 2 comprises a headstock 21 mounted rotatably in conventional manner to a drive unit 23 which is fixed with respect to the bed 6. A tailstock 22 is mounted rotatably to another unit 24 which is mounted upon bed rails 25 for linear movement towards and away from the drive unit 23 and associated headstock 21, again in known manner.

The axially opposed ends of a metal cylinder (not shown) to be metal clad can be mounted to respective ones of the headstock 21 and tailstock 22 for rotation with respect to the arc welding device 3 about an axis generally perpendicular to the longitudinal axis of the arc welding gun of the device 3.

The device 3 is mounted upon a pair of upper rails 32 for linear movement for direction parallel to the axis of the metal cylinder to be clad, so that a welding gun 31, and its associated components, such as wire feed and power supply, can be moved axially back and forth with respect to the cylinder to traverse the surface thereof.

The metal surface machining device 4 comprises a conventional drive unit 41 and a milling head 42, the unit 41 being mounted upon a pair of vertical-spaced rails 43,44 which also extend parallel to the axis of a metal cylinder to be clad with metal as well as to the bedrails and the upper rails 32.

A control unit 50 is provided for controlling operation of the components of the apparatus 1.

In use of the apparatus 1, a metal cylinder to be clad with metal is mounted to the lathe-type support device 2, as discussed above. The metal cylinder is of any suitable metallic material, usually a steel.

Upon rotation of the cylinder by the support device 2, the welding device 3 reciprocates back and forth along the axial length of the metal cylinder, with the tip of the arc welding gun 31 at the required distance from the surface of the cylinder.

Such movement of the arc welding device 3 along its associated upper rails 32 is, in this particular embodiment, tracked by movement of the drive unit 41, and hence the milling head 42, of the machining device 4 along its associated rails 43,44 extending parallel to the upper rails 32 of the welding device 3.

The distance of the milling head 42 is set, such that it machines the metal clad surface of the cylinder to a required thickness, depending upon the eventual application of the resulting hardfaced roller.

Also, because the milling head 42 tracks closely the arc wielding gun 31, machining of the so-clad surface of the cylinder is facilitated, because the cladding metal is still hot. As a consequence, a comparatively smooth clad surface for the eventual hardfaced roller is provided.

The laser monitoring device 5, which is mounted for linear movement along a rail 51 extending parallel to the rails 25,43 and 44, and 32, can be used to monitor the surface of the cylinder, whether it be unclad, partially-clad or fully clad, for controlling operation of the support device 2, for example, the rotational speed thereof and hence that of the metal cylinder to be or being clad, the arc welding device 3 and/or the machining device 4, to provide the required thickness and smoothness of the surface of the cylinder clad by the arc welding device 3.

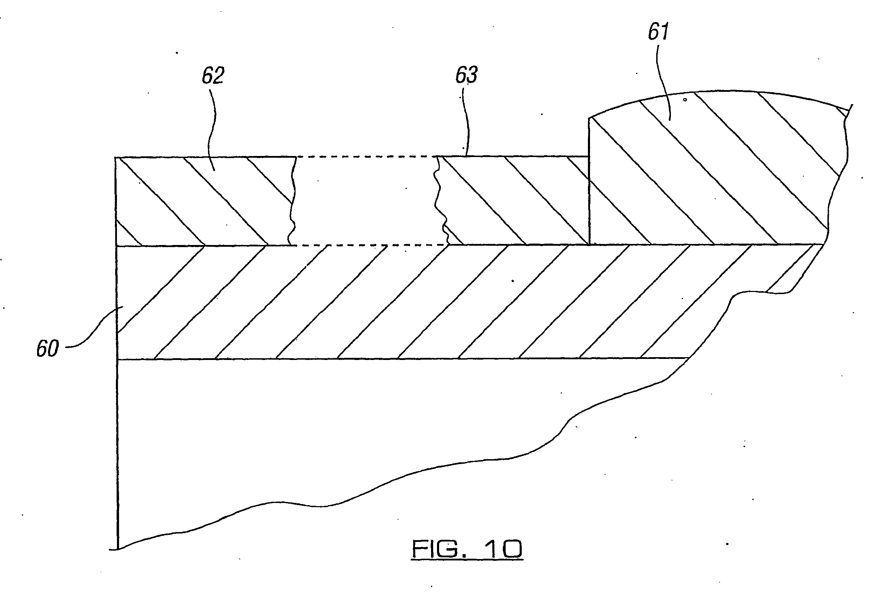

In Figure 10, there is shown an end portion of a metal cylinder 60 which has been at least partially clad with metal by arc welding, as discussed and described above. The metal cladding after the arc welding procedure but prior to its machining is indicated at 61. It may have a typical thickness of, say, 3mm. The machined metal cladding is shown at 62 with a smooth surface 63, its typical thickness being 2mm.

As indicated above, the cylinder 60 maybe of any suitable metallic material, for example, a steel, whilst the cladding metal might typically be a steel, low-alloy ferrous material, iron or a high-alloy ferrous material or a cobalt-, nickel- or copper-based alloy.

## Claims

1. Apparatus (1) for use in the manufacture of clad metal cylindrical substrates (60), comprising welding means (3) adapted to clad a metal cylindrical substrate at a cladding location (100), means (2) for supporting a metal cylindrical substrate (60) to be metal clad by the welding means (3) at the cladding location (100), and a milling device (42) at the cladding location (100) arranged to machine the surface of a clad metal cylindrical substrate (60) by traversing the clad surface of the substrate (60) during or after the cladding operation Vby said welding means (3); wherein said welding means (3) is arranged to traverse along the length of the metal cylindrical substrate (60) to be metal clad and to reciprocate said welding means (3) back and forth along the length of the cylindrical substrate (60) mounted upon the support means (2) for rotation about the axis of the **characterised in that** substrate (60) **characterised in that** the apparatus (1) includes a laser monitoring device (5) mounted for linear movement along a rail (51) and arranged to monitor the surface of a metal substrate (60) before and/or after cladding and/or after machining thereof, to control the operation of said welding means (3) and said milling device (42) and arranged to traverse along the length of the metal cylindrical substrate (60) in unison with or independently of said welding means (3) and/or milling device (42).

2. Apparatus (1) according to claim 1, wherein said welding means (3) is an arc welding gun (31).

3. Apparatus (1) according to any preceding claim, wherein said support means (2) is a lathe-type support (2) with a headstock (21) and tailstock (22).

4. Apparatus (1) according to claim 1, wherein said milling device (42) is arranged to track said welding means (3) as it is cladding a substrate (60) with metal.

5. Apparatus (1) according to claim 1, wherein said welding means (3) and milling device (42)) are programmed to operate in unison with each other or independently of each other.

6. A method of manufacturing a hardfaced, metal-clad cylindrical substrate (60), the method comprising cladding a surface of a metal cylindrical substrate (60) with a metal (61) by clad welding and then machining the so-clad surface (61) of the substrate (60) at the location (100) of the welding operation; wherein a milling device performs the step of machining the surface of a clad along the clad surface substrate (60) by traversing along the clad surface of the substrate (60) during or after cladding operation by said welding means (3); wherein said welding means (3) traverses along the length of the metal cylindrical substrate (60) to be metal clad and reciprocates said welding means (3) back and forth along the length of the cylindrical substrate (60) mounted upon the support means (2) for rotation about the axis of the substrate (60) **characterised in that** the method includes using a laser monitoring device to monitor the surface of the substrate and the surface of the clad metal substrate (60) before and/or after machining thereof, to control the operation of said welding means (3) and/or said milling device (42) and arranged to have a linear movement along a rail and to traverse along the length of the cylindrical substrate such in unison with or independently of said welding means (3) and/or milling device (42).

7. A method according to claim 6, wherein welding is carried out by means of an arc welding gun (31).

## Patentansprüche

1. Vorrichtung (1) zur Verwendung bei der Herstellung eines ummantelten zylindrischen Metallsubstrats (60), mit Schweißmitteln (3) zur Ummantelung eines zylindrischen Metallsubstrats an einer Ummantelungsstation (100), mit Mitteln (2) zur Stützung eines zylindrischen Metallsubstrats (60) zur Metallummantelung durch das Schweißmittel (3) an der Ummantelungsstation (100) und einer Fräseinrichtung (42) an der Ummantelungsstation (100), um die Oberfläche eines ummantelten zylindrischen Metallsubstrats (60) durch Überfahren der ummantelten Oberfläche des Substrats (60) während oder nach dem Ummantelungsvorgang durch das Schweißmittel (3) zu bearbeiten, wobei das Schweißmittel (3) so angeordnet ist, dass es zur Metallummantelung die Länge des zylindrischen Metallsubstrats (60) überfährt und das Schweißmittel (3) entlang der Länge des zylindrischen Substrats (60) vor- und zurückbewegt, das auf dem Stützmittel (2) zur Drehung um die Achse des Substrats (60) befestigt ist, **dadurch gekennzeichnet, dass** die Einrichtung (1) eine Laserüberwachungseinrichtung (5) enthält, die zur linearen Bewegung entlang einer Schiene (51) befestigt ist und so angeordnet ist, dass sie die Oberfläche eines Metallsubstrats (60) vor und/oder nach der Ummantelung und/oder nach dessen Bearbeitung überwacht, um den Betrieb des Schweißmittels (3) und der Fräseinrichtung (42) zu steuern und das entlang der Länge des zylindrischen Metallsubstrats (60) zusammen oder unabhängig von dem Schweißmittel (3) und/oder der Fräseinrichtung (42) bewegbar ist.

2. Vorrichtung (1) nach Anspruch 1, wobei das Schweißmittel (3) eine Lichtbogenschweißpistole (31) ist.

3. Vorrichtung (1) nach einem der vorhergehenden Ansprüche, wobei das Stützmittel (3) ein drehbankartiger Träger (2) mit einem Spindelstock (21) und einem Reitstock (22) ist.

4. Vorrichtung (1) nach Anspruch 1, wobei die Fräseinrichtung (42) so ausgebildet ist, dass sie dem Schweißmittel (3) während der Ummantelung eines Substrats (60) mit Metall folgt.

5. Vorrichtung (1) nach Anspruch 1, wobei das Schweißmittel (3) und die Fräseinrichtung (42) so programmierbar sind, dass sie zusammen miteinander oder unabhängig voneinander arbeiten.

6. Verfahren zur Herstellung eines gehärteten zylindrischen metallummantelten Substrats (60), wobei das Verfahren das Ummanteln der Oberfläche eines zylindrischen Metallsubstrats (60) mit einem Metall (61) durch Mantelverschweißung und dann die Bearbeitung der so ummantelten Oberfläche (61) des Substrats (60) an einem Ort (100) des Schweißbetriebs umfasst, wobei eine Fräseinrichtung den Schritt der Bearbeitung der Oberfläche eines ummantelten Substrats (60) durch Überfahren entlang der ummantelten Oberfläche des Substrats (60) während oder nach dem Ummantelungsvorgang durch das Schweißmittel umfasst, wobei das Schweißmittel (3) das zu ummantelnde zylindrische Metallsubstrat (60) entlang der Länge überfährt und das Schweißmittel (3) entlang der Länge des zylindrischen Substrats vorwärts und rückwärts bewegt wird, das auf dem Stützmittel (2) zur Drehung um die Achse des Substrats (60) befestigt ist, **dadurch gekennzeichnet, dass** das Verfahren die Verwendung eines Laserüberwachungsgerätes zur Überwachung der Oberfläche des Substrats und der Oberfläche des metallverkleidetem Substrats (60) vor und/oder nach dessen Bearbeitung umfasst, um den Betrieb der Schweißmittel (3) und/oder der Bearbeitungsstation (42) zu steuern, und so angeordnet ist, dass eine lineare Bewegung entlang einer Schiene und ein Überfahren der Länge des zylindrischen Substrats gleichzeitig oder unabhängig vom Schweißmittel (3) und/oder dem Fräsmittel (42) erfolgt.

7. Verfahren nach Anspruch 6, wobei das Schweißen mittels einer Lichtbogenschweißpistole (31) ausgeführt wird.

## Revendications

1. Appareil (1) destiné à être utilisé pour la fabrication de substrats cylindriques en métal plaqué (60) comprenant un moyen de soudage (3) adapté pour plaquer un substrat cylindrique en métal à un emplacement de plaquage (100), un moyen (2) pour supporter un substrat cylindrique en métal (60) destiné à être plaqué de métal avec le moyen de soudage (3) à l'emplacement de soudage (100), et un dispositif de fraisage (42) à l'emplacement de plaquage (100) agencé pour usiner la surface d'un substrat cylindrique en métal plaqué (60) en traversant la surface plaquée du substrat (60) pendant ou après l'opération de plaquage réalisée avec ledit moyen de soudage (3) ; ledit moyen de soudage (3) étant agencé pour traverser le long de la longueur du substrat cylindrique en métal (60) destiné à être plaqué de métal et pour faire effectuer un mouvement de va-et-vient audit moyen de soudage (3) en avant et en arrière le long de la longueur du substrat cylindrique (60) monté sur le moyen de support (2) pour la rotation autour de l'axe du substrat (60), **caractérisé en ce que** l'appareil (1) comprend un dispositif de surveillance laser (5) monté pour le mouvement linéaire le long d'un rail (51) et agencé pour surveiller la surface d'un substrat en métal (60) avant et/ou après le plaquage et/ou après son usinage, afin de contrôler le fonctionnement dudit moyen de soudage (3) et dudit dispositif de fraisage (42), et agencé pour traverser le long de la longueur du substrat cylindrique en métal (60) à l'unisson avec ou indépendamment dudit moyen de soudage (3) et/ou du dispositif de fraisage (42).

2. Appareil (1) selon la revendication 1, dans lequel ledit moyen de soudage (3) est un pistolet de soudage à l'arc (31).

3. Appareil (1) selon l'une quelconque des revendications précédentes, dans lequel ledit moyen de support (2) est un support de type à tour (2) avec une poupée fixe (21) et une contre-poupée (22).

4. Appareil (1) selon la revendication 1, dans lequel ledit dispositif de fraisage (42) est agencé pour suivre ledit moyen de soudage (3) lorsqu'il plaque un substrat (60) avec du métal.

5. Appareil (1) selon la revendication 1, dans lequel ledit moyen de soudage (3) et le dispositif de fraisage (42) sont programmés pour fonctionner à l'unisson entre eux ou indépendamment l'un de l'autre.

6. Procédé de fabrication d'un substrat cylindrique en métal plaqué (60) à rechargement dur, le procédé comprenant le plaquage d'une surface d'un substrat cylindrique en métal (60) avec un métal (61) par un soudage pour plaquage et en usinant ensuite la surface (61) ainsi plaquée du substrat (60) à l'emplacement (100) de l'opération de soudage ; dans lequel un dispositif de fraisage réalise l'étape consistant à usiner la surface d'un substrat plaqué (60) en traversant le long de la surface plaquée du substrat (60) pendant ou après l'opération de plaquage réalisée avec ledit moyen de soudage (3) ; ledit moyen de soudage (3) traversant le long de la longueur du substrat cylindrique en métal (60) destiné à être plaqué de métal et ledit moyen de soudage (3) effectuant un mouvement de va-et-vient en avant et en arrière le long de la longueur du substrat cylindrique (60) monté sur le moyen de support (2) pour la rotation autour de l'axe du substrat (60), **caractérisé en ce que** le procédé comprend l'utilisation d'un dispositif de surveillance laser pour surveiller la surface du substrat et la surface du substrat en métal plaqué (60) avant et/ou après son usinage, afin de contrôler le fonctionnement dudit moyen de soudage (3) et dudit dispositif de fraisage (42), et agencé pour avoir un mouvement linéaire le long d'un rail et pour traverser le long de la longueur du substrat cylindrique à l'unisson avec ou indépendamment dudit moyen de soudage (3) et/ou du dispositif de fraisage (42).

7. Procédé selon la revendication 6, dans lequel le soudage est réalisé au moyen d'un pistolet de soudage à l' arc (31).
